# FASCICULE DE BREVET EUROPEEN

(11) **EP 0 524 053 B1**
(45) Date de publication et mention de la délivrance du brevet: **09.11.1994**
(21) Numéro de dépôt: 92401947.4
(22) Date de dépôt: 07.07.1992
(51) Int. Cl.: B60N 2/06

(54) **Glissière pour siège de véhicule comportant un dispositif de réduction des jeux et d'élimination des bruits**
Fahrzeugsitzschiene mit einer Vorrichtung für Spielverringerung und Geräuschunterdrückung
Slide for vehicle seat with a device for play and noise reduction

(30) Priorité: 19.07.1991 FR 9109162
(43) Date de publication de la demande: 20.01.1993
(73) Titulaire: BERTRAND FAURE AUTOMOBILE "BFA", F-91300 MASSY (FR)
(72) Inventeur: Rohee, René, F-61100 La Chapelle Biche (FR)
(74) Mandataire: Madeuf, René Louis

(56) Documents cités:
- EP-A- 0 100 880
- EP-A- 0 334 696
- DE-A- 3 046 165
- DE-A- 3 724 758
- FR-A- 2 635 490
- GB-A- 2 139 485
- GB-A- 2 212 390
- GB-A- 2 219 933
- PATENT ABSTRACTS OF JAPAN vol. 11, no. 272 (M-622)(2719) 4 Septembre 1987 & JP-A-62 074 730

## Description

Depuis très longtemps, les glissières sont utilisées dans les véhicules automobiles pour le réglage de la position avant-arrière d'un siège.

On connaît des dispositions qui comprennent :
- une glissière centrale placée dans l'axe longitudinal du siège pour son réglage en avant ou en arrière.
- un ensemble de deux glissières placées de chaque côte du siège pour réaliser ce même réglage, ces glissières étant en général identiques dans la mesure où il est possible de les placer correctement sur le plancher du véhicule.

Pour réaliser ces glissières, on a été amené à fabriquer des profilés dont les formes se conjuguent de façon à ce que le profilé inférieur, fixe sur le plancher du véhicule directement ou indirectement, présente des ailes latérales venant en relation de forme avec le profilé supérieur mobile de la glissière dont les ailes sont également conformées pour coopérer avec les ailes du profilé fixe, puis entre le profilé fixe et le profilé mobile, soit d'un côte, soit des deux côtes, est montée au moins une bille disposée entre des entretoises cylindriques, de même diamètre que la bille, afin de faciliter le coulissement du profilé supérieur mobile par rapport au profilé inférieur fixe, ces deux profilés constituant la glissière proprement dite.

Malgré des recherches poussées concernant la forme de la section des profilés fixe et mobile et leur montage à l'aide de billes et d'entretoises, voir en particulier le DE-A-3 046 165 on n'a jusqu'à présent pas obtenu les glissières sans jeu qui provoquent des bruits venant s'ajouter aux autres bruits dus à la carrosserie, au moteur et aux transmissions du mouvement sur les roues.

La présente invention remédie d'une manière simple aux inconvénients des jeux et des bruits en créant une glissière comportant un amortisseur simple déformable, limitant considérablement les jeux et, de ce fait, les bruits.

Conformément à l'invention, la glissière pour siège de véhicule, comportant un dispositif de réduction des jeux et d'elimination des bruits, chaque glissière étant composée d'un profilé inférieur à section en U dont la partie supérieure des ailes est conformée en inclinaison vers l'extérieur en ménageant au centre, un chenal creux destine à servir de guide aux billes et entretoises permettant le déplacement aise, sur le dessus du profilé, d'un profilé supérieur en U renversé, dont les ailes sont recourbées à angle droit puis redressées verticalement pour constituer des formes bombées placées en regard des parties verticales du profilé inférieur, glissière comportant, côte intérieur, des verrous de blocage des profilés coulissant sur les profilés fixes d'une manière connue en soi, est caractérisée en ce que, sur le côte externe de chaque glissière, entre les parties bombées et les ailes des profilés, est placé un amortisseur en matière semi-souple déformable maintenant fermement les profilés fixe et mobile l'un par rapport à l'autre dans le sens vertical et dans le sens transversal en évitant ainsi les jeux et, de ce fait, les bruits inhérents aux jeux.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une coupe transversale d'une glissière conforme à l'invention.

La fig. 2 est une vue en perspective d'une glissière présentant, en son centre, une partie arrachée montrant la réalisation de la glissière conforme à l'invention.

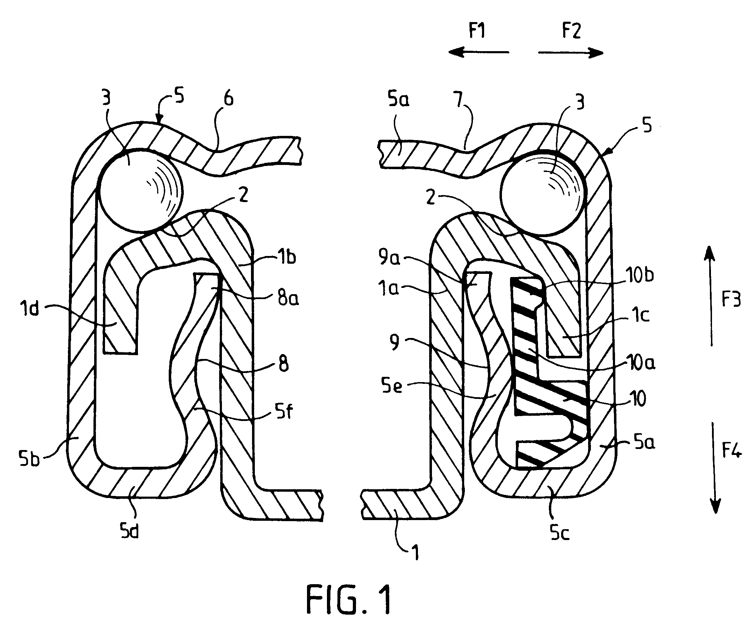

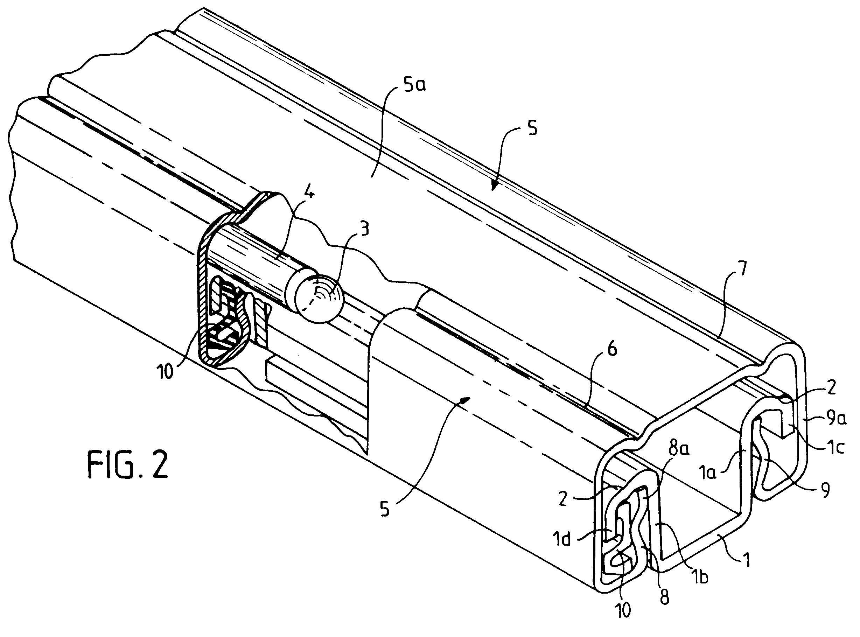

A la fig. 1, on a représenté un profilé inférieur 1 en U dont le sommet des ailes 1a, 1b est d'abord conformé en inclinaison vers l'extérieur en ménageant sensiblement au centre un chenal creux 2, destiné à servir de guide, d'une part, à au moins une bille 3 et, d'autre part, à des entretoises 4 (voir fig. 2).

Finalement, les entretoises terminales 1c, 1d des ailes 1a, 1b du profilé inférieur 1 sont repliées verticalement vers le bas, parallèlement aux ailes 1a, 1b.

Le profilé supérieur 5 affecte sensiblement en section la forme d'un U renversé dont la base supérieure 5a composée de deux rainures 6, 7 symétriquement par rapport au plan central du profilé 5 et qui sert au raidissement du profilé supérieur 5.

Les ailes 5a, 5b du profilé 5 sont courbées à angle droit en 5c, 5d puis, ensuite, redressées sensiblement verticalement en 5e, 5f mais en ménageant dans leur zone médiane des formes bombées 8, 9 de façon que, lorsque le profilé supérieur 5 est en place sur le profilé inférieur 1, les parties terminales 8a, 9a viennent en contact légèrement avec la partie supérieure extérieure des ailes 1a, 1b du profilé inférieur 1.

Finalement, il est placé, entre la forme bombée 9 du profilé supérieur 5 et l'extrémité verticale 1c du profilé inférieur 1, un amortisseur 10 qui, ici, affecte en coupe sensiblement la forme d'un cinq et qui est réalisé en une matière semi-souple déformable, résistant aux agents considérés en particulier à l'eau et aux graisses, placée à l'intérieur des parties coulissantes de la glissière constituée par les profilés 1 et 5.

Du fait que la partie basse massive de l'amortisseur 10 est calée dans le fond de la partie terminale du profilé supérieur 5, que la tige verticale 10a prend appui contre la forme bombée 9 et que la barre supérieure 10b vient contre la partie verticale terminale 1c du profilé inférieur fixe 1, les jeux transversaux dirigés dans le sens des flèches F₁, F₂ (fig. 1), et les jeux verticaux dirigés dans le sens des flèches F₃, F₄ (fig. 1) sont supprimés ou tout au moins amoindris, ce qui évite la création de bruits par contact des parties métalliques entre elles et assure, en même temps, un coulissement doux et parfaitement progressif du profilé supérieur mobile 5 par rapport au profilé fixe 1.

La partie externe de la glissière (partie gauche de la fig. 1) ne comporte pas d'amortisseur car ce côté de la glissière porte les organes de verrouillage permettant de verrouiller la position du profilé supérieur 5 par rapport au profilé inférieur 1, c'est-à-dire le réglage longitudinal du siège place sur la glissière ou le jeu de glissières.

En effet, lorsqu'on a à faire à un montage avec deux glissières, des amortisseurs 10, disposés dans la zone intérieure des glissières mais opposes l'un à l'autre, complètent alors la limitation des jeux et la limitation des bruits.

Etant donné qu'une grande longueur d'amortisseur 10 est utilisée pratiquement sur toute la longueur de la glissière, il est possible de réaliser des profilés plus simples aussi bien le profilé inférieur 1 que le profilé supérieur 5, ce qui réduit les coûts de fabrication.

De plus, comme il a été dit précédemment, l'emploi sur un seul côté de la glissière d'un amortisseur 10 permet une latitude de vrillage et de faux parallélisme de glissières dus, d'une part, à la non planéité du plancher du véhicule et, d'autre part, au montage de ces glissières sous les sièges créant également très souvent un faux parallélisme.

## Revendications

1. Glissière pour siège de véhicule comportant un dispositif de réduction des jeux et d'élimination des bruits, chaque glissière étant composée d'un profilé inférieur (1) à section en U dont la partie supérieure des ailes (1a et 1b) est conformée en inclinaison vers l'extérieur en ménageant au centre, un chenal creux (2) destiné à servir de guide aux billes (3) et entretoises (4) permettant le déplacement aisé, sur le dessus du profilé (1), d'un profilé supérieur (5) en U renversé, dont les ailes (5a) sont recourbées à angle droit puis redressées verticalement pour constituer des formes bombées (8, 9) placées en regard des parties verticales (1a et 1b) du profilé inférieur (1), glissière comportant, côté intérieur, des verrous de blocage des profilés coulissant sur les profilés fixes d'une manière connue en soi, puis sur le côté externe de chaque glissière, entre les parties bombées (9) et les ailes (5a et 1c) des profilés (1 et 5), est placé un amortisseur (10) en matière semi-souple déformable maintenant fermement les profilés fixe et mobile l'un par rapport à l'autre dans le sens vertical et dans le sens transversal, caractérisée en ce que chaque amortisseur est constitué par une pièce continue sensiblement de la longueur de la glissière affectant en section la forme d'un cinq dont la partie massive inférieure est placée entre l'aile (5) et la partie bombée (9) en reposant sur le fond (5c) du profilé supérieur tandis que la barre supérieure (10b) de l'amortisseur prend appui contre la face inférieure de la partie rabattue verticalement (1c) de l'aile considérée du profilé inférieur fixe (1).

2. Glissière suivant la revendication 1, caractérisée en ce que l'amortisseur est réalisé en une matière semi-souple déformable, résistant aux agents considérés, en particulier à l'eau et aux graisses.

## Claims

1. Slide for a vehicle seat, comprising a device for reducing play and eliminating noise, each slide being composed of a lower profiled members (1) of a U-shaped cross-section whose upper part of the side portions (1a and 1b) is shaped to be inclined outwardly for forming a central hollow recess (2) adapted for serving as a guide for balls (3) and braces (4) for providing an easy displacement, on the top part of the profiled member (1), of a reversed U-shaped upper profiled member (5) whose side portions (5a) are curved at a right angle and then straightened up vertically in order to form bulges (8, 9) placed opposite vertical portions (1a and 1b) of the lower profiled member (1), which slide having an inner side provided with latching elements for locking the profiled members sliding on the fixed profiled members in a manner known per se, then, on the outer side of each slide, between the bulges (9) and the side portions (5a and 1c) of the profiled members (1 and 5), there is placed a damping element (10) made of a deformable semi-flexible material and maintaining firmly the fixed and movable profiled members with respect to one another in the vertical direction and in the transverse direction, characterized in that each damping element is made of a continuous member having substantially the length of the slide and having in cross-section the shape of a five, the lower massive portion of which is placed between the side portion (5) and the bulge (9) by bearing on the bottom (5c) of the upper profiled member, while the upper bar (10b) of the damping element is bearing against the lower face of the vertically bent portion (1c) of the considered side portion of the fixed lower profiled member (1).

2. Slide according to claim 1, characterized in that the damping element is made of a deformable semi-flexible material, resisting respective agents, particularly water and greases.

## Patentansprüche

1. Fahrzeugsitzschiene mit einer Vorrichtung für Spielverringerung und Geräuschunterdrückung, wobei jede Schiene aus einem unteren Profil (1) mit U-förmigem Querschnitt besteht, dessen oberer Teil der Schenkel (1a und 1b) schräg nach außen geneigt gestaltet ist, wobei in der Mitte eine Rinne (2) vorgesehen ist, die der Führung der Kugeln (3) und der Hülsen (4) dient und ein leichtes Verschieben auf der Oberseite des Profils (1) ermöglicht, sowie aus einem als umgekehrtes U ausgestalteten oberen Profil (5), dessen Schenkel (5a) nach innen umgebogen, dann senkrecht hochgebogen sind, wobei sie gegenüber den vertikalen Teilen (1a und 1b) des unteren Profils (1) Wölbungen (8, 9) aufweisen, wobei diese Schiene auf der innenseite eine Verriegelung der in den ortsfesten Profilen in an sich bekannter Weise gleitenden Profile umfaßt, des weiteren auf der Außenseite einer jeden Schiene, zwischen den gewölbten Teilen (9) und den Schenkeln (5a und 1c) der Profile (1 und 5) ein Dämpfer (10) aus einem verformbaren, zähelastischen Material angeordnet ist, der das ortsfeste und das bewegliche Profil in Längs- und in Querrrichtung zueinander festhält, dadurch gekennzeichnet, daß jeder Dämpfer (10) von einem durchgehenden Teil gebildet ist, welches im wesentlichen die Länge der Schiene (vgl. Profile 1, 2) hat und im Querschnitt gesehen die Form einer Fünf aufweist, deren massiver unterer Teil zwischen dem Schenkel (5a) und dem gewölbten Teil (9) angeordnet ist und dabei auf dem Boden (5c) des oberen Profils (2) aufliegt, während ein oberer Wulst (10b) des Dämpfers (10) sich gegen die Innenseite des senkrecht nach unten umgebogenen Teils (1c) des entsprechenden Schenkels (1a) des unteren, ortsfesten Profils (1) abstützt.

2. Schiene gemäß Anspruch 1, dadurch gekennzeichnet, daß der Dämpfer (10) aus einem verformbaren, zähelastischen Material besteht, das gegen in Betracht kommende Mittel, insbesondere gegen Wasser und Fette beständig ist.
